# EUROPEAN PATENT APPLICATION

(11) **EP 4 321 333 A1**
(43) Date of publication of application: **14.02.2024**
(21) Application number: 22784711.8
(22) Date of filing: 07.04.2022
(51) Int. Cl.: B32B 5/18, B32B 27/40

(54) **CUSHIONING MATERIAL**

(30) Priority: 09.04.2021 JP 2021066727
(71) Applicant: Mitsui Chemicals, Inc., Tokyo 104-0028 (JP)
(72) Inventor: KAJIURA, Makoto, Sodegaura-shi, Chiba 299-0265 (JP); KINBARA, Yuho, Sodegaura-shi, Chiba 299-0265 (JP); KAGEOKA, Masakazu, Sodegaura-shi, Chiba 299-0265 (JP); KONDO, Takahiro, Sodegaura-shi, Chiba 299-0265 (JP); SUGAWARA, Kei, Sodegaura-shi, Chiba 299-0265 (JP)
(74) Representative: Hoffmann Eitle
(86) International application number: PCT/JP2022/017266
(87) International publication number: WO 2022/215729

(57) **Abstract**

A buffer material (1) includes a foam layer (3) including a foamed polyurethane (2), and a gel layer (4) disposed on a surface of the foam layer (3) and including a polyurethane gel. The storage modulus (E'_{foam}) of the foam layer (3) at 23°C is 1×10⁴ Pa or more and 5×10⁶ Pa or less. The storage modulus (E'_{gel}) of the gel layer (4) at 23°C is 1×10⁴ Pa or more and 1×10⁷ Pa or less. The ratio (E'_{gel}/ E'_{foam}) of the storage modulus (E'_{gel}) of the gel layer (4) at 23°C to the storage modulus (E'_{foam}) of the foam layer (3) at 23°C is 0.1 or more and less than 10.

## Description

### TECHNICAL FIELD

The present invention relates to a buffer material.

### BACKGROUND ART

Conventionally, foamed polyurethanes have been known as buffer materials. Examples of the foamed polyurethanes include polyurethane foam and a polyurethane foam elastomer.

Furthermore, it has been known to dispose a skin layer on a surface of such a foamed polyurethane.

As an example of the foamed polyurethane, the following buffer material has been known. That is to say, the buffer material consists of a skinned foamed polyurethane including a foam layer and a skin layer formed on a surface of the foam layer. Further, the foam layer of the skinned foamed polyurethane is a foamed polyurethane obtained by allowing a foaming isocyanate component to react with a foaming active hydrogen group-containing component. Furthermore, the skin layer is a polyurethane resin layer obtained by allowing a skin-isocyanate component containing an aliphatic polyisocyanate and/or an alicyclic polyisocyanate to react with a skin-active hydrogen group-containing component. Furthermore, the storage modulus (E'_{coa}t) of the skin layer at 23°C is 1×10⁷ Pa or more and 3×10⁸ Pa or less. Furthermore, the storage modulus (E'_{foam}) of the foam layer at 23°C is 1×10⁵ Pa or more and 5×10⁶ Pa or less. Furthermore, the ratio (E'_{coat}/E'_{foam}) of the storage modulus (E'_{coa}t) of the skin layer at 23°C to the storage modulus (E'_{foam}) of the foam layer at 23°C is 10 or more and 500 or less (for example, see Patent Document 1).

### Citation List

### Patent Document

Patent Document 1: PCT International Publication No. WO2017/038910

### SUMMARY OF THE INVENTION

### PROBLEM TO BE SOLVED BY THE INVENTION

Meanwhile, depending on the use, buffer materials are required to have a texture similar to human skin. More specifically, it is required for buffer materials to have an appropriate softness and elasticity and further to reduce a bottom-out feeling.

The present invention provides a buffer material having an excellent texture.

### MEANS FOR SOLVING THE PROBLEM

The present invention [1] includes a buffer material including: a foam layer including a foamed polyurethane; and a gel layer disposed on a surface of the foam layer and including a polyurethane gel, wherein a storage modulus (E'_{foam}) of the foam layer at 23°C is 1×10⁴ Pa or more and 5×10⁶ Pa or less, wherein a storage modulus (E'_{gel}) of the gel layer at 23°C is 1×10⁴ Pa or more and 1×10⁷ Pa or less, and wherein a ratio (E'_{gel}/E'_{foam}) of the storage modulus (E'_{gel}) of the gel layer at 23°C to the storage modulus (E'_{foam}) of the foam layer at 23°C is 0.1 or more and less than 10.

The present invention [2] includes the buffer material described in the above-described [1], wherein the foam layer has a thickness of 1000 µm or more and 20000 µm or less, and wherein the gel layer has a thickness of 500 µm or more and 10000 µm or less.

The present invention [3] includes the buffer material described in the above-described [1] or [2], wherein the foam layer has a density of 80 kg/m³ or more and 200 kg/m³ or less, and wherein the gel layer has a density of 500 kg/m³ or more and 1000 kg/m³ or less.

The present invention [4] includes the buffer material described in any one of the above-described [1] to [3], further including a skin layer disposed on a surface of the gel layer.

The present invention [5] includes the buffer material described in any one of the above-described [1] to [4], being a buffer material for robots.

### EFFECTS OF THE INVENTION

The buffer material of the present invention includes a foam layer including a foamed polyurethane and a gel layer disposed on a surface of the foam layer and including a polyurethane gel. Further, all of the storage modulus of the foam layer, the storage modulus of the gel layer, and the ratio of them are within specific ranges. Thus, the buffer material of the present invention has excellent softness and elasticity and can reduce a bottom-out feeling. As a result, the buffer material of the present invention has an excellent texture.

### BRIEF DESCRIPTION OF THE DRAWINGS

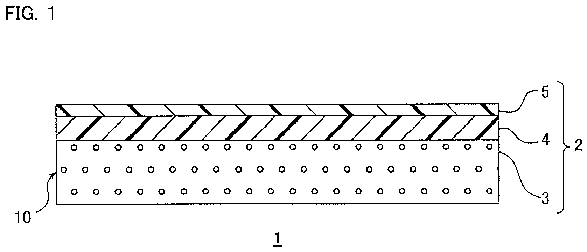

FIG. 1 is a schematic view illustrating one embodiment of the buffer material of the present invention.

### DESCRIPTION OF THE EMBODIMENTS

As illustrated in FIG. 1, the buffer material 1 includes a gel-layered foamed polyurethane 2. The gel-layered foamed polyurethane 2 includes a foam layer 3 and a gel layer 4 disposed on a surface of the foam layer 3.

The foam layer 3 includes a foamed polyurethane. The foam layer 3 preferably consists of a foamed polyurethane. The foamed polyurethane is a foam molded body without having a gel layer (described below) and a skin layer (described below). The foamed polyurethane provides excellent elasticity.

More specifically, examples of the foamed polyurethane include polyurethane foam and a foam elastomer. As the foamed polyurethane, polyurethane foam is preferable. Examples of polyurethane foam include soft foam and hard foam.

The soft foam and hard foam are distinguished by hardness. Soft foam has an asker F hardness of, for example, 1 or more, preferably 10 or more. Further, soft foam has an asker F hardness of, for example, 90 or less, preferably 70 or less. Meanwhile, hard foam has an asker F hardness of, for example, more than 90. As the polyurethane foam, soft foam is preferable.

The foamed polyurethane may be obtained, for example, as a commercially available product. Alternatively, the foamed polyurethane may be obtained, for example, as a reaction product of a foaming isocyanate component and a foaming active hydrogen group-containing component.

To allow a foaming isocyanate component to react with a foaming active hydrogen group-containing component, for example, the foaming isocyanate component and the foaming active hydrogen group-containing component (such as the premix described below) are first mixed together to prepare a foamable polyurethane composition. Next, the foamable polyurethane composition is allowed to foam, for example, in a mold having a predetermined shape. In this manner, a foamed polyurethane is produced.

Examples of the foaming isocyanate component include a polyisocyanate monomer, a polyisocyanate derivative, and an isocyanate group-terminated prepolymer.

Examples of the polyisocyanate monomer include an aromatic polyisocyanate monomer, an araliphatic polyisocyanate monomer, and an aliphatic polyisocyanate monomer.

Examples of the aromatic polyisocyanate monomer include tolylene diisocyanate (TDI), diphenylmethanediisocyanate (MDI), toluidine diisocyanate (TODI), paraphenylene diisocyanate, and naphthalene diisocyanate (NDI). Examples of the diphenylmethanediisocyanate include 2,2'-diphenylmethanediisocyanate, 2,4'-diphenylmethanediisocyanate, and 4,4'-diphenylmethanediisocyanate. These may be used singly or in a combination of two or more.

Examples of the araliphatic polyisocyanate monomer include xylylene diisocyanate (XDI) and tetramethylxylylene diisocyanate (TMXDI). Examples of the xylylene diisocyanate include 1,3-xylylene diisocyanate and 1,4-xylylene diisocyanate. These may be used singly or in a combination of two or more.

Examples of the aliphatic polyisocyanate monomer include trimethylenediisocyanate, tetramethylenediisocyanate, pentamethylenediisocyanate (PDI), hexamethylenediisocyanate (HDI), 1,2-propanediisocyanate, 1,2-butanediisocyanate, 2,3-butanediisocyanate, 1,3-butanediisocyanate, 2,4,4-trimethylhexamethylenediisocyanate, 2,2,4-trimethylhexamethylenediisocyanate, and 2,6-diisocyanatemethylcaproate. These may be used singly or in a combination of two or more.

The aliphatic polyisocyanate monomer includes an alicyclic polyisocyanate monomer. Examples of the alicyclic polyisocyanate monomer include isophorone diisocyanate (IPDI), norbornene diisocyanate (NBDI), methylenebis (cyclohexylisocyanate) (H₁₂MDI), and bis(isocyanatomethyl) cyclohexane (H₆XDI). These may be used singly or in a combination of two or more.

Examples of the polyisocyanate derivative include a modified product of the above-described polyisocyanate monomer. Examples of the modified product include a uretdione-modified product, an isocyanurate-modified product, an allophanate-modified product, a polyol modified product, a biuret-modified product, an urea-modified product, an oxadiazinetrione-modified product, and a carbodiimide-modified product. Examples of the polyisocyanate derivative further include polymethylene polyphenylene polyisocyanate (crude MDI, polymeric MDI). These may be used singly or in a combination of two or more.

The isocyanate group-terminated prepolymer is a urethane prepolymer having at least two isocyanate groups at its molecule end. The isocyanate group-terminated prepolymer is a reaction product obtained by the urethane-forming reaction of a material polyisocyanate with a material polyol in a predetermined equivalent ratio. Examples of the material polyisocyanate include the above-described polyisocyanate monomer and the above-described polyisocyanate derivative. Examples of the material polyol include the macropolyol described below. Further, the equivalent ratio (NCO/OH) of the material polyisocyanate to the hydroxyl group of the material polyol is, for example, more than 1, preferably 1.5 to 100. The urethane-forming reaction may comply with a known method. The reaction temperature of the urethane-forming reaction is, for example, 50 to 120°C. Further, the reaction time is, for example, 0.5 to 15 hours. Furthermore, the urethane-forming reaction may be a solventless reaction or a reaction under the presence of a solvent.

These foaming polyisocyanate components may be used singly or in a combination of two or more.

The foaming active hydrogen group-containing component is a component having two or more active hydrogen groups (such as hydroxyl groups, amino groups) in its molecule. Examples of the foaming active hydrogen group-containing component include a foaming polyol component. Examples of the foaming polyol component include a macropolyol and a low-molecular-weight polyol.

The macropolyol is an organic compound having two or more hydroxyl groups in its molecule and having a relatively high molecular weight. The macropolyol has a number average molecular weight of, for example, 400 or more, for example, 20000 or less. The number average molecular weight may be calculated from the hydroxyl equivalent and the average number of hydroxyl groups using a known method. The number average molecular weight is calibrated with standard polystyrene measured with gel permeation chromatograph (hereinafter, the same applies).

Examples of the macropolyol include a polyether polyol, a polyester polyol, a polycarbonate polyol, a polyurethane polyol, an epoxy polyol, a vegetable oil polyol, a polyolefin polyol, an acrylic polyol, and a vinyl monomer-modified polyol. These macropolyols may be used singly or in a combination of two or more. As the macropolyol, a polyether polyol is preferable.

Examples of the polyether polyol include a polyoxyalkylene polyol. Examples of the polyoxyalkylene polyol include a polyoxyalkylene (C2-3) polyol and a polytetramethylene ether polyol.

Examples of the polyoxyalkylene (C2-3) polyol include a polyoxyethylene polyol, polyoxypropylene polyol, a polyoxytriethylene polyol, and a polyoxyethylene·polyoxypropylene polyol (random or block copolymer).

Examples of the polytetramethylene ether polyol include a ring-opening polymerization product (crystalline polytetramethylene ether glycol) obtained by the cationic polymerization of tetrahydrofuran. Examples of the polytetramethylene ether polyol further include noncrystalline polytetramethylene ether glycol. In the noncrystalline polytetramethylene ether glycol, tetrahydrofuran is copolymerized with alkyl-substituted tetrahydrofuran and/or a dihydric alcohol. The term "crystalline" means a characteristic to be solid at 25°C. Further, the term "noncrystalline" means a characteristic to be liquid at 25°C.

In the foaming active hydrogen group-containing component, the macropolyol has a number average molecular weight of, for example, 400 or more, preferably 500 or more, more preferably 1000 or more. Further, the number average molecular weight of the macropolyol is, for example, 15000 or less, preferably 13000 or less, more preferably 12000 or less, even more preferably 10000 or less, even more preferably 8000 or less.

In the foaming active hydrogen group-containing component, the average number of hydroxyl groups of the macropolyol is, for example, 2 or more, preferably 2.5 or more. Further, the average number of hydroxyl groups of the macropolyol is, for example, 6 or less, preferably 4 or less, more preferably 3 or less.

The low-molecular-weight polyol is an organic compound having two or more hydroxyl groups in its molecule and having a relatively low molecular weight. The low-molecular-weight polyol has a molecular weight of, for example, 40 or more and less than 400, preferably 300 or less.

Examples of the low-molecular-weight polyol include a dihydric alcohol, a trihydric alcohol, and a tetrahydric or more alcohol. Examples of the dihydric alcohol include ethylene glycol, 1,2-propanediol, 1,3-propanediol, 1,2-butanediol, 1,3-butanediol, 1,4-butanediol, 1,5-pentanediol, 1,6-hexanediol, neopentyl glycol, diethylene glycol, triethylene glycol, and dipropylene glycol. Examples of the trihydric alcohol include glycerin and trimethylolpropane. Examples of the tetrahydric or more alcohol include pentaerythritol and diglycerin. Examples of the low-molecular-weight polyol further include a polymer obtained by the additional polymerization of alkylene (C2 to 3) oxide to an alcohol having 2 to 4 hydroxyl groups in each molecule so that the number average molecular weight becomes less than 400. These may be used singly or in a combination of two or more.

As the low-molecular-weight polyol, a dihydric alcohol and a trihydric alcohol are preferable, and a dihydric alcohol is more preferable.

As the foaming active hydrogen group-containing component, a macropolyol is preferable, and a polyether polyol is more preferable.

The foaming active hydrogen group-containing component has an average functionality of, for example, 2 or more, preferably 2.5 or more, more preferably 2.8 or more. Further, the average functionality of the foaming active hydrogen group-containing component is, for example, 6 or less, preferably 4.5 or less, more preferably 4.0 or less, even more preferably 3.5 or less. The average functionality of the foaming active hydrogen group-containing component can be calculated from the charged material components.

Further, the foaming active hydrogen group-containing component has an average hydroxyl value of, for example, 20 mgKOH/g or more, preferably 24 mgKOH/g or more. Furthermore, the average hydroxyl value of the foaming active hydrogen group-containing component is, for example, 200 mgKOH/g or less, preferably 70 mgKOH/g or less. The hydroxyl value can be determined from a known hydroxyl number measurement method such as an acetylation method or a phthalation method (in accordance with JIS K1557-1 (2007)) (the same applies hereinafter).

The foamable polyurethane composition may further contain a cross-linking agent. The foamable polyurethane composition preferably contains a cross-linking agent. The cross-linking agent can improve the impact resilience of the foamed polyurethane (foam layer 3). Further, the cross-linking agent can adjust the mold density of the foamed polyurethane (foam layer 3). Furthermore, the cross-linking agent can micronize the cells of the foamed polyurethane (foam layer 3) and can increase the air flow amount. The content ratio of the cross-linking agent is appropriately set depending on the purpose and use.

Examples of the cross-linking agent include an alkanolamine. Examples of the alkanolamine include a dialkanolamine and a trialkanolamine. Examples of the dialkanolamine include diethanolamine. Examples of the trialkanolamine include trimethanolamine, triethanolamine, tripropanolamine, triisopropanolamine, and tributanolamine. These may be used singly or in a combination of two or more.

Examples of the cross-linking agent further include the above-described low-molecular-weight polyol and/or its alkylene oxide-added polyol. Examples of the cross-linking agent further include quadrivalent aliphatic amine, aliphatic secondary diamine, and alicyclic secondary diamine. Furthermore, the cross-linking agent can be obtained as a commercially available product. Examples of the commercially available product include JEFFLINK 754 (manufactured by Huntsman), CLEARLINK 1000 (manufactured by Dorf Ketal Chemicals), CLEARLINK 3000 (manufactured by Dorf Ketal Chemicals), and ETHACURE 90 (manufactured by ALBEMARLE). These can be used singly or in a combination of two or more.

The foamable polyurethane composition may further contain a catalyst and a blowing agent. The foamable polyurethane composition preferably contains a catalyst and a blowing agent. The content ratios of the catalyst and the blowing agent are appropriately set depending on the purpose and use.

Examples of the catalyst include a known urethane-forming catalyst. Examples of the urethane-forming catalyst include an amine catalyst and a metal catalyst. These may be used singly or in a combination of two or more.

Examples of the blowing agent include a known blowing agent. Specifically, examples of the blowing agent include water and a halogen-substituted aliphatic hydrocarbon. Examples of the halogen-substituted aliphatic hydrocarbon include trichlorofluoromethane, dichlorodifluoromethane, trichloroethane, trichloroethylene, tetrachloroethylene, trans-1-chloro-3,3,3-trifluoropropene, 1, 1, 1-4,4,4-hexafluoro-2-butene, methylene chloride, trichlorotrifluoroethane, dibromo tetrafluoro ethane, and carbon tetrachloride. These may be used singly or in a combination of two or more. As the blowing agent, water is preferable.

The foamable polyurethane composition may further contain a cell opener. The foamable polyurethane composition preferably contains a cell opener. The cell opener can increase the cell opening percentage of the foamed polyurethane (foam layer 3) and increase the air flow amount. The content ratio of the cell opener is appropriately set depending on the purpose and use.

Examples of the cell opener include a polyoxyalkylene polyol with an oxyalkylene unit content of more than 50% by mass. A polyoxyalkylene polyol with an oxyalkylene unit content of 50% by mass or less is a foaming active hydrogen group-containing component.

More specifically, the oxyalkylene unit content of the polyoxyalkylene polyol used as the cell opener is more than 50% by mass, preferably 60% by mass or more, more preferably 70% by mass or more. Further, the oxyalkylene unit content of the polyoxyalkylene polyol used as the cell opener is normally 95% by mass or less. Furthermore, the average functionality of the polyoxyalkylene polyol used as the cell opener is, for example, 1.5 or more, preferably 2 or more. Furthermore, the average functionality of the polyoxyalkylene polyol used as the cell opener is, for example, 8 or less, preferably 6 or less. Furthermore, the hydroxyl value of the polyoxyalkylene polyol used as the cell opener is, for example, 20 mgKOH/g or more, preferably 35 mgKOH/g or more. Furthermore, the hydroxyl value of the polyoxyalkylene polyol used as the cell opener is, for example, 200 mgKOH/g or less, preferably 150 mgKOH/g or less.

Further, as necessary, the foamable polyurethane composition may contain another additive. Examples of the other additive include a known additive generally used for the production of the foamed polyurethane. More specifically, examples of the additive include an antioxidant, an ultraviolet ray absorber, a light stabilizer, an antifoaming agent, a fire retardant, and a coloring agent. The content ratio of the additive is appropriately set depending on the purpose and use.

The foamable polyurethane composition has an isocyanate index of, for example, 75 or more, preferably 80 or more, more preferably 84 or more. Further, the isocyanate index is, for example, 95 or less, preferably 90 or less, more preferably 88 or less. The isocyanate index is the value obtained by multiplying the ratio of the isocyanate group of the foaming isocyanate component to the active hydrogen group in the foamable polyurethane composition by 100 (NCO concentration/active hydrogen group concentration × 100). When the isocyanate index is within the above-described range, a foamed polyurethane with excellent mechanical properties and durability can be produced.

Then, the foamable polyurethane composition is allowed to react and foam, for example, in a forming mold with a known method. Examples of the foaming method include a slab method, a mold method, a spray method, and a mechanical frothing method. In this manner, a foam layer 3 is produced.

The storage modulus (E'_{foam}) of the foam layer 3 at 23°C is 1×10⁴ Pa or more, preferably 3×10⁴ Pa or more, more preferably 5×10⁴ Pa or more, even more preferably 1×10⁵ Pa or more. Further, the storage modulus (E'_{foam}) of the foam layer 3 at 23°C is, 5×10⁶ Pa or less, preferably 1×10⁶ Pa or less, more preferably 8×10⁵ Pa or less, even more preferably 5×10⁵ Pa or less, particularly preferably 3×10⁵ Pa or less. When the storage modulus (E'_{foam}) of the foam layer 3 at 23°C is within the above-described range, a buffer material 1 with excellent softness and elasticity and a reduced bottom-out feeling can be produced.

The storage modulus is a value at 23°C when the temperature dependency of dynamic viscoelasticity (10 Hz) is measured. The storage modulus is measured in accordance with Examples described below (the same applies hereinafter).

The thickness of the foam layer 3 is set depending, for example, on the type of the forming mold. The thickness of the foam layer 3 is, for example, 500 µm or more, preferably 1000 µm or more, more preferably 5000 µm or more. Further, the thickness of the foam layer 3 is, for example, 50000 µm or less, preferably 20000 µm or less, more preferably 10000 µm or less.

Further, the density of the foam layer 3 is, for example, 10 kg/m³ or more, preferably 50 kg/m³ or more, more preferably 80 kg/m³ or more. Furthermore, the density of the foam layer 3 is, for example, 500 kg/m³ or less, preferably 200 kg/m³ or less, more preferably 150 kg/m³ or less. When the density is within the above-described range, a buffer material with excellent mechanical properties and texture is produced.

The gel layer 4 is disposed on a surface of the foam layer 3. The gel layer 4 includes a polyurethane gel. The gel layer 4 preferably consists of a polyurethane gel. The polyurethane gel provides excellent elasticity.

The polyurethane gel is a super-low hardness polyurethane elastomer. The polyurethane gel is defined by Shore C hardness. The polyurethane gel has a Shore C hardness (JIS K 7312 (1996)) of, for example, 90 or less, preferably 40 or less, more preferably 20 or less, even more preferably 10 or less. Further, the Shore C hardness of the polyurethane gel is, for example, 0 or more, preferably 1 or more, more preferably 3 or more, even more preferably 5 or more.

The polyurethane gel contains a reaction product of a gelling isocyanate component and a gelling active hydrogen group-containing component. More specifically, the polyurethane gel is obtained by allowing a gelling isocyanate component to react with a gelling active hydrogen group-containing component.

The gelling isocyanate component is an isocyanate component in which the average number of isocyanate groups is within a predetermined range. The average number of the isocyanate groups of the gelling isocyanate component is, for example, 1.8 or more, preferably 2.0 or more. Further, the average number of the isocyanate groups of the gelling isocyanate component is, for example, 4.0 or less, preferably 3.5 or less. When the average number of the isocyanate groups of the gelling isocyanate component is within the above-described range, a gell-state polyurethane resin can efficiently be produced. In other words, excellent production efficiency of the polyurethane gel is achieved. The average number of the isocyanate groups of the gelling isocyanate component is calculated with a known method based on the formulation.

Examples of the gelling isocyanate component include a polyisocyanate derivative. The polyisocyanate derivative is a derivative of a polyisocyanate monomer. Examples of the polyisocyanate monomer include the above-described aromatic polyisocyanate monomer, the above-described araliphatic polyisocyanate monomer, and the above-described aliphatic polyisocyanate monomer. Further, examples of the derivative include the above-described modified product. Examples of the modified product include a uretdione-modified product, an isocyanurate-modified product, an allophanate-modified product, a polyol-modified product, a biuret-modified product, an urea-modified product, an oxadiazinetrione-modified product, and a carbodiimide-modified product. Further, examples of the polyisocyanate derivative also include polymethylene polyphenylene polyisocyanate (crude MDI, polymeric MDI). These may be used singly or in a combination of two or more.

As the gelling isocyanate component, in view of mechanical properties, heat-resisting properties, and texture, a derivative of an aliphatic polyisocyanate monomer is preferable, an isocyanurate derivative of an aliphatic polyisocyanate monomer is more preferable, and an isocyanurate derivative of pentamethylenediisocyanate is even more preferable.

The gelling active hydrogen group-containing component is a component having two or more active hydrogen groups (such as hydroxyl groups, amino groups) in each molecule. Examples of the gelling active hydrogen group-containing component include a gelling polyol component. Examples of the gelling polyol component include a macropolyol and a low-molecular-weight polyol.

Examples of the macropolyol include the macropolyol described above as the foaming active hydrogen group-containing component. These macropolyols may be used singly or in a combination of two or more. As the macropolyol, a polyether polyol is preferable, a polytetramethylene ether polyol is more preferable, a polytetramethylene ether glycol is more preferable, and a noncrystalline polytetramethylene ether glycol is even more preferable.

In the gelling active hydrogen group-containing component, the macropolyol has a number average molecular weight of, for example, 400 or more, preferably 500 or more, more preferably 1000 or more. Further, the number average molecular weight of the macropolyol is, for example, 15000 or less, preferably 13000 or less, more preferably 12000 or less, even more preferably 10000 or less, even more preferably 5000 or less, particularly preferably 3000 or less.

Examples of the low-molecular-weight polyol include the low-molecular-weight polyol described above as the foaming active hydrogen group-containing component. These low-molecular-weight polyols may be used singly or in a combination of two or more.

The gelling active hydrogen group-containing component preferably does not contain a low-molecular-weight polyol and contains only a macropolyol.

The average number of the hydroxyl groups of (the total amount of) the gelling active hydrogen group-containing component is, for example, 3.0 or less, preferably 2.5 or less. Further, the average number of the hydroxyl groups of (the total amount of) the gelling active hydrogen group-containing component is, for example, 2.0 or more. The average number of hydroxyl groups of the gelling active hydrogen group-containing component is particularly preferably 2.0.

Further, the average hydroxyl value (OH value) of (the total amount of) the gelling active hydrogen group-containing component is, for example, 10 mgKOH/g or more, preferably 12 mgKOH/g or more, more preferably 15 mgKOH/g or more. Further, the average hydroxyl value (OH value) of (the total amount of) the gelling active hydrogen group-containing component is, for example, 150 mgKOH/g or less, preferably 120 mgKOH/g or less, more preferably 100 mgKOH/g or less. The hydroxyl value is measured in accordance with the prescription of JIS K1557-1 (2007).

Then, to produce the gel layer 4, the urethane-forming reaction of the gelling isocyanate component and the gelling active hydrogen group-containing component is carried out in a predetermined mold. The urethane-forming reaction may be a solventless reaction, or a reaction under the presence of a solvent. The urethane-forming reaction is preferably a solventless reaction.

For the urethane-forming reaction, a known method is employed. Examples of the reaction method include a one-shot method and a prepolymer method. In the urethane-forming reaction, the equivalent ratio (NCO/active hydrogen group) of the isocyanate group in the gelling isocyanate component to the active hydrogen group in the gelling isocyanate component is, for example, 0.2 or more, preferably 0.4 or more, and, for example, 0.8 or less, preferably 0.7 or less. Further, the reaction temperature is, for example, a room temperature to 120°C. Further, the reaction time is, for example, 5 minutes to 72 hours. The reaction temperature may be constant, or gradually increased, or gradually decreased.

Then, the reaction of the gelling isocyanate component with the gelling active hydrogen group-containing component produces a gel layer 4. The gel layer 4 is aged, if necessary, and then removed from the mold.

Alternatively, to produce the gel layer 4, the gelling isocyanate component is allowed to react with the gelling active hydrogen group-containing component under the presence of a plasticizer.

The plasticizer is not especially limited, and examples of the plasticizer include a phthalic acid-based plasticizer, a hydrogenerated phthalic acid-based plasticizer, and an adipic acid-based plasticizer. Examples of the phthalic acid-based plasticizer include a diundecyl phthalate, a dioctyl phthalate, a diisononyl phthalate, a di-isodecyl phthalate, and a dibutyl phthalate. Examples of the hydrogenerated phthalic acid-based plasticizer include a hydrogen-added diisononyl phthalate. Examples of the adipic acid-based plasticizer include dioctyl adipate. These may be used singly or in a combination of two or more.

The ratio of the plasticizer to 100 parts by mass of the gelling active hydrogen group-containing component is, for example, 10 parts by mass or more, preferably 50 parts by mass or more, more preferably 100 parts by mass or more. Further, the ratio of the plasticizer to 100 parts by mass of the gelling active hydrogen group-containing component is, for example, 1000 parts by mass or less, preferably 500 parts by mass or less, more preferably 200 parts by mass or less.

Further, in the above-described reaction, as necessary, a known additive may be added. Examples of the additive include a urethane-forming catalyst, a filler, a storage stabilizer, an anti-blocking agent, a heat-resistant stabilizer, a light stabilizer, an ultraviolet ray absorber, an antioxidant, an antifoaming agent, a mold-releasing agent, a pigment, a dye, a lubricant, and an anti-hydrolysis agent. The mixing ratio of the additive is appropriately set.

As the additive, a filler is preferable. Examples of the filler include thermally conductive inorganic particles. Examples of the thermally conductive inorganic particles include nitride particles, hydroxide particles, oxide particles, carbide particles, carbonate particles, titanate particles, and other metal particles. Examples of the nitride particles include boron nitride particles, aluminum nitride particles, silicon nitride particles, and gallium nitride particles. Examples of the hydroxide particles include aluminum hydroxide particles and magnesium hydroxide particles. Examples of the oxide particles include silicon oxide particles, aluminum oxide particles, titanic oxide particles, zinc oxide particles, tin oxide particles, copper oxide particles, and nickel oxide particles. Examples of the carbide particles include silicon carbide particles. Examples of the carbonate particles include calcium carbonate particles. Examples of the titanate particles include barium titanate particles and potassium titanate particles. Examples of other metal particles include copper particles, silver particles, gold particles, nickel particles, aluminum particles, and platinum particles. These may be used singly or in a combination of two or more.

The timing of the addition of an additive is not especially limited. For example, an additive may be added to the gelling isocyanate component. Alternatively, an additive may be added to the gelling active hydrogen group-containing component. Alternatively, an additive may be added to both of the gelling isocyanate component and the gelling active hydrogen group-containing component. Further, an additive may be added when the gelling isocyanate component and the gelling active hydrogen group-containing component are mixed together.

The storage modulus (E'_{gel}) of the gel layer 4 at 23°C is, 1×10⁴ Pa or more, preferably 3×10⁴ Pa or more, more preferably 5×10⁴ Pa or more, even more preferably 7×10⁴ Pa or more. Further, the storage modulus (E'_{gel}) of the gel layer 4 at 23°C is, 1×10⁷ Pa or less, preferably 5×10⁶ Pa or less, more preferably 1×10⁶ Pa or less, even more preferably 5×10⁵ Pa or less, particularly preferably 3×10⁵ Pa or less. When the storage modulus (E'_{gel}) of the gel layer 4 at 23°C is within the above-described range, a buffer material with an excellent texture is produced.

Further, the ratio (E'_{gel}/E'_{foam}) of the storage modulus (E'_{gel}) of the gel layer 4 at 23°C to the storage modulus (E'_{foam}) of the foam layer 3 at 23°C is, 0.1 or more, preferably 0.2 or more, more preferably 0.4 or more, even more preferably 0.8 or more. Further, the ratio (E'_{gel}/E'_{foam}) of the storage modulus (E'_{gel}) of the gel layer 4 at 23°C to the storage modulus (E'_{foam}) of the foam layer 3 at 23°C is less than 10, preferably 5 or less, more preferably 3 or less, even more preferably 1 or less.

When the ratio (E'_{gel}/E'_{foam}) of the storage modulus (E'_{gel}) of the gel layer 4 at 23°C to the storage modulus (E'_{foam}) of the foam layer 3 at 23°C is less than the above-described lower limit, the softness decreases and an excellent texture is not obtained.

When the ratio (E'_{gel}/E'_{foam}) of the storage modulus (E'_{gel}) of the gel layer 4 at 23°C to the storage modulus (E'_{foam}) of the foam layer 3 at 23°C is the above-described upper limit or more, the softness decreases, and the bottom-out feeling cannot be suppressed, and thus an excellent texture is not obtained.

The thickness of the gel layer 4 is set depending on the type of the mold. The gel layer 4 has a thickness of, for example, 300 µm or more, preferably 500 µm or more, more preferably 1000 µm or more. Further, the thickness of the gel layer 4 is, for example, 20000 µm or less, preferably 10000 µm or less, more preferably 5000 µm or less.

Further, the thickness of the gel layer 4 is smaller than the thickness of the foam layer 3. More specifically, the ratio (thickness of the gel layer 4/thickness of the foam layer 3) of the thickness of the gel layer 4 to the thickness of the foam layer 3 is, for example, 0.025 or more, preferably 0.1 or more, and, for example, 10 or less, preferably 1 or less. When the ratio of the thickness is within the above-described range, a buffer material 1 with an excellent texture is produced.

Further, the gel layer 4 has a density of, for example, 100 kg/m³ or more, preferably 500 kg/m³ or more, more preferably 800 kg/m³ or more. Further, the density of the gel layer 4 is, for example, 3000 kg/m³ or less, preferably 2000 kg/m³ or less, more preferably 1000 kg/m³ or less. When the density is within the above-described range, a buffer material with excellent mechanical properties and texture is produced.

The gel layer 4 and the foam layer 3 are bonded together with a known method. For example, the gel layer 4 is bonded to the foam layer 3 using a tack of the gel layer. Alternatively, for example, the gel layer 4 is bonded to the foam layer 3 through a known adhesive. Preferably, the gel layer 4 is bonded to the foam layer 3 with a tack of the gel layer 4.

The buffer material 1 (gel-layered foamed polyurethane 2) may further include a skin layer 5 disposed on a surface of the gel layer 4. Examples of the skin layer 5 include a polyurethane resin layer. More specifically, examples of the skin layer 5 include a cured film of a solution of a known polyurethane resin and/or a dispersion of the polyurethane resin.

The method of forming the skin layer 5 on a surface of the gel layer 4 is not especially limited, and a known method is employed. For example, first, a solution of a known polyurethane resin and/or a dispersion of the polyurethane resin is/are applied and cured on the surface side of the gel layer 4 on the internal surface of a mold for forming the gel layer 4. In this manner, a skin layer 5 is formed on the internal surface of the mold. Next, using the mold including the skin layer 5, the gel layer 4 is formed. Thereafter, the gel layer 4 and the skin layer 5 are demolded. In this manner, the gel layer 4 including the skin layer 5 on its surface is produced. In this case, the gel layer 4 is bonded to the skin layer 5 with a tack of the gel layer 4.

Alternatively, for example, using a mold without the skin layer 5, a gel layer 4 is formed, and thereafter a solution of a known polyurethane resin and/or a dispersion of the polyurethane resin is/are applied and cured on the surface of the gel layer 4. In this manner, the gel layer 4 including the skin layer 5 on its surface is produced.

The storage modulus (E'_{coa}t) of the skin layer 5 at 23°C is, for example, 1×10⁷ Pa or more, preferably 3×10⁷ Pa or more, more preferably 5×10⁷ Pa or more, even more preferably 7×10⁷ Pa or more. Further, the storage modulus (E'_{coa}t) of the skin layer 5 at 23°C is, for example, 3×10⁸ Pa or less, preferably 2×10⁸ Pa or less, more preferably 1×10⁸ Pa or less.

Further, the ratio (E'_{coat}/E'_{foam}) of the storage modulus (E'_{coa}t) of the skin layer 5 at 23°C to the storage modulus (E'_{foam}) of the foam layer 3 at 23°C is, for example, 0.1 or more, preferably 1.0 or more, more preferably 10 or more, even more preferably 50 or more. Further, the ratio (E'_{coat}/E'_{foam}) of the storage modulus (E'_{coa}t) of the skin layer 5 at 23°C to the storage modulus (E'_{foam}) of the foam layer 3 at 23°C is, for example, 2000 or less, preferably 1000 or less, more preferably, 500 or less, even more preferably 300 or less, particularly preferably 200 or less.

When the ratio (E'_{coat}/E'_{foam}) of the storage modulus (E'_{coa}t) of the skin layer 5 at 23°C to the storage modulus (E'_{foam}) of the foam layer 3 at 23°C is within the above-described range, a buffer material 1 with excellent texture can be produced.

Further, the ratio (E'_{coat}/E'_{gel}) of the storage modulus (E'_{coa}t) of the skin layer 5 at 23°C to the storage modulus (E'_{gel}) of the gel layer 4 at 23°C is, for example, 0.1 or more, preferably 1 or more, more preferably 10 or more. Further, the ratio (E'_{coat}/E'_{gel}) of the storage modulus (E'_{coa}t) of the skin layer 5 at 23°C to the storage modulus (E'_{gel}) of the gel layer 4 at 23°C is, for example, 2000 or less, preferably 1000 or less, more preferably 500 or less.

When the ratio (E'_{coat}/E'_{gel}) of the storage modulus (E'_{coa}t) of the skin layer 5 at 23°C to the storage modulus (E'_{gel}) of the gel layer 4 at 23°C is within the above-described range, a buffer material 1 with an excellent texture can be produced.

The skin layer 5 has a thickness of, for example, 1 µm or more, preferably 10 µm or more, more preferably 20 µm or more, even more preferably 50 µm or more, particularly preferably 70 µm or more. Further, the thickness of the skin layer 5 is, for example, 2000 µm or less, preferably 1000 µm or less, more preferably 700 µm or less, even more preferably 300 µm or less, particularly preferably 150 µm or less.

Further, the thickness of the skin layer 5 is smaller than the thickness of the foam layer 3 and the thickness of the gel layer 4. More specifically, the ratio (thickness of the skin layer 5/thickness of the foam layer 3) of the thickness of the skin layer 5 to the thickness of the foam layer 3 is, for example, 0.001 or more, preferably 0.005 or more, and, for example, 1 or less, preferably 0.1 or less. When the ratio of the thickness is within the above-described range, a buffer material 1 with an excellent texture can be produced.

Further, the ratio (thickness of the skin layer 5/thickness of the gel layer 4) of the thickness of the skin layer 5 to the thickness of the gel layer 4 is, for example, 0.0001 or more, preferably 0.001 or more, and, for example, 1 or less, preferably 0.1 or less. When the ratio of the thickness is within the above-described range, a buffer material 1 with an excellent texture can be produced.

Moreover, the buffer material 1 as described above includes the foam layer 3 including the foamed polyurethane and the gel layer 4 disposed on a surface of the foam layer 3 and including a polyurethane gel. Further, the storage modulus of the foam layer 3, the storage modulus of the gel layer 4, and the ratio of them are within specific ranges. Thus, the buffer material 1 has excellent softness and elasticity, and the bottom-out feeling can be reduced. As a result, the buffer material 1 has an excellent texture.

In addition, the above-described buffer material 1 can have shock-absorbing properties provided by the foam layer 3, and thus the amount of the gel layer 4 can be reduced. As a result, the above-described buffer material 1 is lighter than a buffer material without a foam layer 3 (for example, a buffer material consisting of a gel layer 4).

Therefore, the buffer material 1 is suitably used, for example, in various industrial fields. Examples of the industrial fields include the field of furniture, the field of automatic motion machine (robotics), and the field of sports. Examples of the use of the buffer material 1 in the field of furniture include furniture corner guards, cushioned carpets, and anti-collision cushions. Examples of the use of the buffer material 1 in the in the field of robotics include buffer materials for factory robots, buffer materials for building management robots, buffer materials for personal guide robots, buffer materials for communication robots, and buffer materials for nursing care robots. Examples of the use of the buffer material 1 in the field of sports include protectors for ball games and protectors for martial arts. The buffer material 1 has an excellent texture and thus is particularly preferably used in the field of automatic motion machine (robotics). In other words, the buffer material is particularly preferably a buffer material for robots.

In the buffer material 1 illustrated in FIG. 1, the gel layer 4 and the skin layer 5 are formed only on a front surface of the foam layer 3. However, for example, the gel layer 4 and the skin layer 5 may be formed on all the front surface, back surface, and side surface of the foam layer 3. Alternatively, the gel layer 4 and the skin layer 5 may be formed on the front surface and back surface of the foam layer 3 while not formed on the side surface of the foam layer 3.

### Example

The present invention is described next with reference to Examples and Comparative Examples. The present invention is, however, not limited to Examples in any way. The "parts" and "%" are based on mass unless otherwise specified. The specific numeral values used in the description below, such as mixing ratios (content ratios), physical property values, and parameters, can be replaced with the corresponding mixing ratios (content ratios), physical property values, and parameters in the above-described "DESCRIPTION OF THE EMBODIMENTS", including the upper limit values (numeral values defined with "or less", and "less than") or the lower limit values (numeral values defined with "or more", and "more than").

### <Foam Layer>

### Materials

· 1,4-bis(isocyanatomethyl) cyclohexane (synthesized in accordance with Production Example 3 of WO2009/51114. Purity of (measured by gas chromatography) 99.9%, the trans/cis ratio (molar basis) = 86/14)
· Tolylene diisocyanate: the trade name: "Cosmonate T-80", manufactured by Mitsui Chemicals & SKC Polyurethanes Inc.
· Polyoxyethylene·polyoxypropylene polyol: the trade name: "ACTCOL ED-28", a number average molecular weight: 4000, an average hydroxyl value: 28.1 mgKOH/g, manufactured by Mitsui Chemicals & SKC Polyurethanes Inc.)
· Polytetramethylene ether polyol: the trade name: "PTG-1000", a number average molecular weight: 1000, an average hydroxyl value = 109.9 mgKOH/g, manufactured by Hodogaya Chemical Co., Ltd.)
· Polytetramethylene ether polyol: the trade name: "PTG-3000 SN", a number average molecular weight: 3000, an average hydroxyl value = 37.7 mgKOH/g, manufactured by Hodogaya Chemical Co., Ltd.)
· Polyoxypropylene polyol: the trade name "ACTCOL T-3000", an average hydroxyl value of 56 mgKOH/g, an average functionality of 3, manufactured by Mitsui Chemicals & SKC Polyurethanes Inc.
· Low-molecular-weight polyol: the trade name "1,4-butanediol", manufactured by Mitsubishi Chemical Corporation
· Catalyst: amine catalyst, the trade name: "DABCO 33LV", a 33% dipropylene glycol solution of triethylenediamine, manufactured by Evonic Corporation
· Catalyst: amine catalyst, the trade name: "DABCO TMR", manufactured by Evonik Industries AG
· Catalyst: metal catalyst, DBTDL, dibutyltin (IV) dilaurate (dibutyltin dilaurate), manufactured by TCI
· Catalyst: a metal catalyst, K-CAT XK-633, manufactured by Kusumoto Chemicals, Ltd.
· Catalyst: a metal catalyst, BiCAT 8108, Shepherd Chemical Japan, Inc.
· Catalyst: a metal catalyst, the trade name: "DABCO T-9", manufactured by Evonic Corporation
· Catalyst: a metal catalyst: the trade name "Stanoct", manufactured by Mitsubishi Chemical Corporation
· Foam stabilizer: a silicone-based foam stabilizer: the trade name: "Y10366J", manufactured by Momentive
· Foam stabilizer: a silicone-based foam stabilizer: the trade name: "B8545", manufactured by Momentive
· Foam stabilizer: a silicone-based foam stabilizer, the trade name; "Niax silicone L-580", manufactured by Momentive
· Antioxidant: the trade name; "IRGANOX 245", a hindered phenol compound, manufactured by BASF Japan
· Hindered amine light stabilizer: the trade name; "LA-72", manufactured by ADEKA CORPORATION
· Antioxidant: "JP-310", tridecyl phosphite, manufactured by Johoku Chemical Co.,Ltd.
· Plasticizer: the trade name "DINA", diisononyl adipate, manufactured by FUJIFILM Wako Pure Chemical Corporation
· Blowing Agent: ion-exchange water

### Preparation Example 1 (Foam Layer 1)

As a foamed polyurethane, Tera Venus WS (the trade name, manufactured by Yukigaya Chemical Industry Co., Ltd., a thickness of 10 mm (10000 µm)) was prepared. This was used as a foam layer 1.

### Preparation Example 2 (Foam Layer 2)

Under nitrogen atmosphere, the following components were stirred with a three-one motor at 80°C × for 5 hours, thereby producing an isocyanate-terminated prepolymer. The concentration of the isocyanate group was 6.64%.

1,4-bis(isocyanatomethyl) cyclohexane 227 parts by mass
PTG-1000 132 parts by mass
PTG-3000 SN 641 parts by mass
Stanoct dissolved in DINA at a concentration of 4% 0.125 parts by mass
JP-310 0.023 parts by mass

The following components were mixed together to prepare a resin premix.

ACTCOL ED-28 25 parts by mass
1,4-butanediol 25 parts by mass
Ion-exchange water 1.2 parts by mass
DABCO TMR 0.5 parts by mass
LA-72 0.5 parts by mass
IRGANOX 245 0.1 parts by mass
B8545 1.0 parts by mass
Y10366J 1.0 parts by mass

Next, the temperature of the resin premix was adjusted to 22°C±1°C, and the following components were added thereto. Immediately thereafter, the resin premix was vigorously stirred with a homogenizer (8000 rpm) for 5 seconds to produce a mixture.

K-CAT XK-633 2.0 parts by mass
BiCAT 8108 2.0 parts by mass
Isocyanate-terminated prepolymer 79.4 parts by mass
1,4-bis(isocyanatomethyl) cyclohexane 12.2 parts by mass
(Isocyanate Index: 105)

Next, the mixture was inserted in a mold (A4 size × thickness of 10 mm) of which temperature was adjusted to 80°C to allow the mixture to foam. The foam mixture was used as a foam layer 2.

### Preparation Example 3 (Foam Layer 3)

The following components were mixed to prepare a resin premix.

ACTCOL T-3000 100 parts by mass
DABCO 33LV 0.2 parts by mass
Ion-exchange water 1.6 parts by mass
Niax silicone L-580 0.5 parts by mass

Next, the temperature of the resin premix was adjusted to 22°C±1°C, and the following components were added to the resin premix. Immediately thereafter, the resin premix was vigorously stirred with a homogenizer (8000 rpm) for 5 seconds to produce a mixture.

DABCO T-9 0.05 parts by mass
Cosmonate T-80 25.7 parts by mass
(Isocyanate Index: 105)

Next, the mixture was inserted in a wooden box and formed into slab foam. The foam product was left to stand in a 60°C oven for 24 hours. Thereafter, the foam product was cut into a piece with a thickness of 10 mm. The cut piece was used as a foam layer 3.

### <Gel Layer and Skin Layer>

### Materials

· Aliphatic Polyisocyanate: the trade name "STABiO D-376N", pentamethylene diisocyanate derivative, manufactured by Mitsui Chemicals, Inc.
· Aliphatic polyisocyanate: the trade name "STABiO D-370N", pentamethylene diisocyanate derivative, manufactured by Mitsui Chemicals, Inc.
· Polytetramethylene ether polyol: the trade name "PTXG-1800", a copolymer of tetrahydrofuran and neopentyl glycol, noncrystalline polytetramethylene ether glycol, a number average molecular weight of 1800, an average hydroxyl value of 60 mgKOH/g, an average functionality of 2, manufactured by Asahi Kasei Corp.
· Antifoaming agent: the trade name "BYK-088", a silicone-based surfactant, manufactured by BYK Japan KK
· Catalyst: dibutyltin(IV) dilaurate, Tokyo Chemical Industry Co., Ltd.
· Plasticizer: Hexamoll DINCH, a hydrogen-added diisononyl phthalate, manufactured by BASF Japan Ltd.
· Stabilizer: IRGANOX 245, an antioxidant, a hindered phenol compound, BASF Japan Ltd.
· Stabilizer: TINUVIN 234, an ultraviolet ray absorber, a benzotriazole compound, BASF Japan Ltd.
· Polyurethane coating agent: "FORTIMO XSP-659", a bis(isocyanatomethyl) cyclohexane solution, a solid content concentration of 16%, manufactured by Mitsui Chemicals, Inc.

### Preparation Example 4 (Gel Layer 1 and Skin Layer 1)

On one side of the interior surface of the mold, FORTIMO XSP-659 was applied and dried to produce a skin layer 1 consisting of polyurethane resin. The skin layer 1 had a thickness of 80 to 100 µm. As the mold, a mold with inside dimensions of 120 mm × 120 mm × 2 mm and a mold with inside dimensions of 120 mm × 120 mm × 10 mm were used.

Meanwhile, the following components were stirred using a three-one motor to produce a resin premix.

PTXG-1800 100 parts by mass
Hexamoll DINCH 127.15 parts by mass
Dibutyltin dilaurate 0.024 parts by mass
BYK-088 0.24 parts by mass

Next, the following components were stirred using a three-one motor and vacuum defoamed to produce a mixture.

Resin premix 100 parts by mass
STABiO D-370N 4.66 parts by mass
Equivalent ratio (NCO/active hydrogen group): 0.583

28.8 g of the above-described mixture was carefully poured, in order not to form bubbles, into the mold in which the skin layer 1 was formed, and cured in an 80°C oven for 1 hour. Thereafter, the molded product was demolded, thereby producing a gel layer 1 including a skin layer 1. The gel layer 1 had a thickness of 2 mm (2000 µm) or 10 mm (10000 µm).

### Preparation Example 5 (Gel Layer 2 and Skin Layer 2)

On one side of the interior surface of the mold, FORTIMO XSP-659 was applied and dried to produce a skin layer 2 consisting of polyurethane resin. The skin layer 2 had a thickness of 80 to 100 µm. As the mold, a mold with inside dimensions of 120 mm × 120 mm × 2 mm and a mold with inside dimensions of 120 mm × 120 mm × 10 mm were used.

Meanwhile, the following components were stirred using a three-one motor to produce a resin premix.

PTXG 1800 100 parts by mass
Dibutyltin dilaurate 0.01 parts by mass
IRGANOX 245 0.1 parts by mass
TINUVIN 234 0.1 parts by mass
BYK-088 0.1 parts by mass

Next, the following components were stirred using a three-one motor and vacuum defoamed to produce a mixture.

Resin premix 100 parts by mass
STABiO D- 376N 19.5 parts by mass
Equivalent ratio (NCO/active hydrogen group): 1.00

28.8 g of the above-described mixture was carefully poured, in order not to form bubbles, into the mold in which the skin layer 2 was formed, and cured in an 80°C oven for 1 hour. Thereafter, the molded product was demolded to produce a gel layer 2 including a skin layer 2. The gel layer 2 had a thickness of 2 mm (2000 µm) or 10 mm (10000 µm).

### <Buffer Material>

### Example 1

The gel layer 1 including the skin layer 1 and the foam layer 1 were bonded together with a tack of the gel layer 1. In this manner, a buffer material including a foam layer, a gel layer, and a skin layer was produced. The foam layer had a thickness of 10000 µm, the gel layer had a thickness of 2000 µm, and the skin layer had a thickness of 80 to 100 µm.

### Comparative Example 1

The gel layer 1 including the skin layer 1 and the foam layer 2 were bonded together with a tack of the gel layer 1. In this manner, a buffer material including a foam layer, a gel layer, and a skin layer was produced. The foam layer had a thickness of 10000 µm, the gel layer had a thickness of 2000 µm, and the skin layer had a thickness of 80 to 100 µm.

### Comparative Example 2

The gel layer 2 including the skin layer 2 and the foam layer 3 were not able to be bonded together with a tack of the gel layer 2. Hence, they are bonded together using an adhesive. More specifically, on a surface of the gel layer 2, a commercially-available adhesive (the trade name Ultra multiple-application SU premium soft, manufactured by Konishi Co.,Ltd.) was thinly spread with a spatula. Then, the gel layer 2 including the skin layer 2 and the foam layer 3 were bonded together through the adhesive and left to stand for approximately 15 minutes to cure the adhesive. Further, they were left to stand for 24 hours to completely cure the adhesive. In this manner, a buffer material including the foam layer, the gel layer, and the skin layer was produced. The foam layer had a thickness of 10000 µm, the gel layer had a thickness of 2000 µm, and the skin layer had a thickness of 80 to 100 µm. Further, the dried adhesive had a thickness of 110 to 170 µm.

### Comparative Example 3

The gel layer 1 including the skin layer 1 was used as a buffer material. The gel layer had a thickness of 10000 µm, and the skin layer had a thickness of 80 to 100 µm.

### Comparative Example 4

The foam layer 1 was used as a buffer material. The foam layer had a thickness of 10000 µm.

### <Physical Properties>

### (1) Storage Modulus

The storage modulus (E'_{gel}) of the gel layer and the storage modulus (E'_{foam}) of the foam layer were obtained by the following method. In other words, the temperature dependency of dynamic viscoelasticity of the gel layer was measured with a dynamic viscoelasticity device (manufactured by IT measurement control Co., Ltd., Model: DVA-200) under the conditions of a tensile mode, frequency 10 Hz, and a temperature increase speed of 5°C/min. The storage modulus at 23°C was defined as the storage modulus (E'_{gel}) of the gel layer. Further, a 20 mm × 20 mm × 10 mm sample was cut from the core of the foam layer, and the temperature dependency of dynamic viscoelasticity of the sample was measured with a dynamic viscoelasticity device (manufactured by IT measurement control Co., Ltd., Model: DVA-200) under the conditions of a compression mode, frequency of 10 Hz, and a temperature increase speed of 5°C/min. The storage modulus at 23°C was defined as the storage modulus (E'_{gel}) of the gel layer. Further, the ratio (E'_{gel}/E'_{foam}) of the storage modulus (E'_{gel}) of the gel layer to the storage modulus (E'_{foam}) of the foam layer was calculated.

Further, the storage modulus (E'_{coat}) of the skin layer was obtained in the same manner as the production of the gel layer. The storage modulus (E'_{coat}) of the skin layer at 23°C was 1.6×10⁷ Pa.

### (2) Density

The density of the gel layer and the density of the foam layer were obtained with the following method. A 100 mm ×100 mm × thickness 10 mm sample was cut from the core of the gel layer. Next, the mass and dimensions of the sample were measured, and the mass was divided by the volume, thereby obtaining the density. Further, a 100 mm ×100 mm × thickness 10 mm sample was cut from the core of the foam layer. Next, the mass and dimensions of the sample were measured, and the mass was divided by the volume, thereby obtaining the density.

### <Evaluations>

### (1) Texture Test

The buffer material was put on a table. Then, the central part of the upper surface of the buffer material was pressed by the finger to compare the texture of the buffer material with the texture of human skin. The texture of human skin was defined as the texture obtained when the ventral portion of the human arm was pressed by the finger. The buffer material having the foam layer and the gel layer was 100 mm long × 100 mm wide × 12 mm thick in size. Further, the buffer material having only one of the foam layer and the gel layer was 100 mm long × 100 mm wide × 10 mm thick in size.

In the texture test, the following items were comprehensively evaluated.

a. Softness on Contact (softness)
b. Weight of Stress Change (elasticity)
c. Degree of Bottom-out Feeling

The closeness between the texture of the buffer material and the texture of human skin was evaluated on a scale. Specifically, a case in which the textures were the closest was rated 10 points and a case in which the textures were the farthest was rated 1 point.

The bottom-out feeling means the feeling obtained when the depth of the finger press reaches a predetermined value and the finger press stops.

### (2) Compression Test

An index of whether softness was felt at the moment when the finger came into contact with the buffer material was measured as follows. In other words, a stress was given to the central part of the upper surface of the buffer material to obtain the stress at the time of 0.2 mm deformation and the stress at the time of 0.5 mm deformation. Then, a numerical value was obtained by dividing the stress at the time of 0.5 mm deformation by the stress at the time of 0.2 mm deformation. The evaluation was based on the premise that the lower the numerical value is, the closer to human skin the softness is. The buffer material having the foam layer and the gel layer was 100 mm long × 100 mm wide × 12 mm thick in size. Further, the buffer material having only one of the foam layer and the gel layer was 100 mm long × 100 mm wide × 10 mm thick in size.

### (3) Mass Measurement

The mass of the buffer material was measured. The buffer material having the foam layer and the gel layer was 100 mm long × 100 mm wide × 12 mm thick in size. Further, the buffer material having only one of the foam layer and the gel layer was 100 mm long × 100 mm wide × 10 mm thick in size.

### [Table 1]

**Table 1**

| No. | | | Example 1 | Comp. Ex. 1 | Comp. Ex. 2 | Comp. Ex. 3 | Comp. Ex. 4 |
|---|---|---|---|---|---|---|---|
| Skinned Gel Layer | Gel Layer 1 | Thickness (µm) | 2000 | 2000 | - | 10000 | - |
| | | E'gel (Pa) | 1.2×10⁵ | 1.2×10⁵ | - | 1.2×10⁵ | - |
| | | Density (Kg/m³) | 970 | 970 | - | 970 | - |
| | Gel Layer 2 | Thickness (µm) | - | - | 2000 | - | - |
| | | E'gel (Pa) | - | - | 4.5×10⁶ | - | - |
| | | Density (Kg/m³) | - | - | 1100 | - | - |
| Foam layer | Foam layer 1 | Thickness (µm) | 10000 | - | - | - | 10000 |
| | | E'foam (Pa) | 1.3×10⁵ | - | - | - | 1.3×10⁵ |
| | | Density (Kg/m³) | 120 | - | - | - | 120 |
| | Foam layer 2 | Thickness (µm) | - | 10000 | - | - | - |
| | | E'foam (Pa) | - | 1.9×10⁶ | - | - | - |
| | | Density (Kg/m³) | - | 250 | - | - | - |
| | Foam layer 3 | Thickness (µm) | - | - | 10000 | - | - |
| | | E'foam (Pa) | - | - | 1.9×10⁵ | - | - |
| | | Density (Kg/m³) | - | - | 55 | - | - |
| E'gel / E'foam | | | 0.92 | 0.063 | 23.7 | - | - |
| Evaluations | Texture | (a) Softness | Good | Bad | Bad | Good | Good |
| | | (b) Weight of Stress Change | Light | Light | Light | Heavy | Light |
| | | (c) Bottom-out Feeling | Absence | Absence | Presence | Absence | Presence |
| | | Comprehensive Evaluation | 8 points | 2 points | 1 point | 9 points | 5 points |
| | Compression Test (0.5mm/0.2mm) | | 2.42 | 7.93 | 4.09 | 2.81 | 2.87 |
| | Weight (g) | | 3.14 | 4.44 | 2.75 | 9.70 | 1.20 |

While the illustrative embodiments of the present invention are provided in the above description, such is for illustrative purpose only and it is not to be construed as limiting in any manner. Modification and variation of the present invention that will be obvious to those skilled in the art is to be covered by the following claims.

### Industrial Applicability

The buffer material of the present invention is suitably used in the field of automatic motion machine (robotics) and the field of sports.

### Description of Reference Numerals

- 1: buffer material
- 2: gel-layered foamed polyurethane
- 3: foam layer
- 4: gel layer
- 5: skin layer

## Claims

1. A buffer material comprising:
a foam layer including a foamed polyurethane; and
a gel layer disposed on a surface of the foam layer and including a polyurethane gel,
wherein a storage modulus (E'_{foam}) of the foam layer at 23°C is 1×10⁴ Pa or more and 5×10⁶ Pa or less,
wherein a storage modulus (E'_{gel}) of the gel layer at 23°C is 1×10⁴ Pa or more and 1×10⁷ Pa or less, and
wherein a ratio (E'_{gel}/E'_{foam}) of the storage modulus (E'_{gel}) of the gel layer at 23°C to the storage modulus (E'_{foam}) of the foam layer at 23°C is 0.1 or more and less than 10.

2. The buffer material according to claim 1,
wherein the foam layer has a thickness of 1000 µm or more and 20000 µm or less, and
wherein the gel layer has a thickness of 500 µm or more and 10000 µm or less.

3. The buffer material according to claim 1,
wherein the foam layer has a density of 80 kg/m³ or more and 200 kg/m³ or less, and
wherein the gel layer has a density of 500 kg/m³ or more and 1000 kg/m³ or less.

4. The buffer material according to claim 1, further comprising a skin layer disposed on a surface of the gel layer.

5. The buffer material according to claim 1, being a buffer material for robots.
